# FASCICULE DE BREVET EUROPEEN

(11) **EP 4 003 902 B1**
(45) Date de publication et mention de la délivrance du brevet: **25.10.2023**
(21) Numéro de dépôt: 20744031.4
(22) Date de dépôt: 23.07.2020
(51) Int. Cl.: B67D 7/02, B67D 7/74, B67D 7/78, B67D 7/84

(54) **SYSTÈME DE DISTRIBUTION D'UNE SOLUTION D'URÉE COMPRENANT UN CONTENEUR TRANSPORTABLE ET DISPOSITIF DE DISTRIBUTION ASSOCIÉ**
UREA-LÖSUNGSABGABESYSTEM, EINSCHLIESSLICH EINES TRANSPORTABELEN BEHÄLTERS UND ZUGEHÖRIGER ABGABEVORRICHTUNG
DISPENSING SYSTEM FOR A UREA SOLUTION INCLUDING A TRANSPORTABLE CONTAINER AND ASSOCIATED DISPENSING DEVICE

(30) Priorité: 24.07.2019 FR 1908413
(43) Date de publication de la demande: 01.06.2022
(73) Titulaire: TotalEnergies OneTech, 92400 Courbevoie (FR)
(72) Inventeur: DAVERAT, Pierre, 69390 VOURLES (FR); GUÉNA, Olivier, 69540 IRIGNY (FR); BUTAUD, Romain, 69420 CONDRIEU (FR); HIÉRONIMUS, Jean-Michel, 69800 St Priest (FR)
(74) Mandataire: Lavoix
(86) Numéro de dépôt international: PCT/EP2020/070757
(87) Numéro de publication internationale: WO 2021/013914

(56) Documents cités:
- FR-A1- 3 053 603
- KR-A- 20170 034 691
- US-A1- 2010 200 107
- US-A1- 2011 126 514

## Description

La présente invention concerne un système de distribution d'une solution d'urée pour véhicule, notamment pour un véhicule diesel, comprenant au moins un premier récipient d'une solution d'urée.

Dans une ligne d'échappement d'un véhicule diesel, il est prévu une étape de de post-traitement réducteur catalytique sélectif (ou SCR pour « Selective Catalytic Reducer » en anglais) dans les véhicules Diesel, au cours de laquelle une réduction des NOx ou oxydes d'azote est opérée sur un catalyseur contenant du platine et du palladium, et en présence d'ammoniac gazeux.

Pour introduire de l'ammoniac gazeux dans l'échappement, il est connu de le produire directement dans la conduite avant le SCR en vaporisant une solution aqueuse d'urée qui, placée à une température moyenne oscillant généralement de 200°C à 400°C, se décompose progressivement en ammoniac gazeux. Cependant, dans certaines configurations d'installation du SCR et de l'injection d'urée, les constructeurs ont constaté l'apparition de dépôts dans les conduites d'échappement avant l'entrée du SCR, qui peuvent provoquer une obturation partielle voire totale du conduit d'échappement et créer ainsi des pertes en puissance du moteur.

Lors de l'utilisation de cette solution d'urée aqueuse, il est alors nécessaire d'y ajouter au moins un additif supplémentaire afin de permettre à la solution d'urée de réduire davantage la concentration d'oxydes d'azote dans le gaz d'échappement d'un véhicule automobile Diesel et d'éviter les dépôts créant une perte en puissance moteur. A cet effet, un système de préparation peut être installé dans un centre de production de la solution d'urée, afin de pouvoir préparer et distribuer sélectivement la solution d'urée mélangée avec au moins un additif ou la solution d'urée sans additif.

Un tel système de distribution ne donne cependant pas entière satisfaction. En effet, l'ajout de l'additif dans la solution d'urée dans un centre de production complique la gestion des récipients de la solution d'urée et de l'additif. En outre, pour des endroits reculés dont l'accès est difficile, il est peu pratique de transporter les grands récipients vers ces endroits pour préparer la solution d'urée. Plus particulièrement, la distribution d'une solution d'urée est compliquée pour des endroits où il y a peu ou pas de stations-service.

Un système de distribution d'une solution d'urée est connu du document US 2011/126514 A1. Ledit document divulgue un système de distribution d'une solution aqueuse d'urée comprenant un réservoir de concentré d'urée connecté à un distributeur/doseur d'urée, un réservoir d'eau déminéralisée relié à un distributeur/doseur d'eau, un réservoir de mélange relié à une sortie du distributeur/doseur d'urée et à une sortie du distributeur/doseur d'eau, un ensemble de systèmes de filtration et de vérification de la qualité d'échantillons relié au réservoir de mélange, un réservoir terminal de stockage et de distribution relié à l'ensemble de systèmes de filtration et de vérification, et un distributeur/doseur de la solution aqueuse d'urée.

De plus, Il est notamment difficile de préparer une petite quantité de la solution d'urée avec ou sans additif adaptée aux besoins de consommateurs individuels.

Un but de l'invention est de rendre le système de distribution plus flexible et de permettre de distribuer la solution d'urée, additivée ou non, même dans les régions lointaines.

A cet effet, l'invention a pour objet un système de distribution d'une solution d'urée, comprenant un conteneur transportable et comportant à l'intérieur du conteneur :
- au moins un premier récipient d'une solution d'urée,
- au moins un deuxième récipient d'un additif pour la solution d'urée, et
- au moins un premier ensemble de circuits fluidiques, comprenant :
   - un premier circuit fluidique raccordant le premier récipient à une jonction,
   - au moins un deuxième circuit fluidique raccordant le deuxième récipient à la jonction, la jonction plaçant le deuxième circuit fluidique en communication fluidique avec le premier circuit fluidique,
      le deuxième circuit fluidique comprenant une première vanne configurable entre une position ouverte, dans laquelle le premier circuit fluidique est en communication fluidique avec le deuxième circuit fluidique de sorte à mélanger la solution d'urée et l'additif, et une position fermée, dans laquelle la communication fluidique entre le premier circuit fluidique et le deuxième circuit fluidique est interrompue, et
   - un premier circuit de distribution raccordé à la jonction, le premier circuit de distribution comprenant une première sortie apte à délivrer la solution d'urée mélangée avec l'additif ou la solution d'urée sans l'additif.

Lorsque qu'une solution d'urée additivée doit être distribuée, l'additif est ajouté à la solution d'urée sur le lieu de distribution au lieu d'un centre de production lointain, c'est-à-dire au plus près du consommateur. Ceci permet de mieux gérer la solution d'urée et les additifs, de rendre le système de distribution entier transportable, et d'éviter la difficulté de déplacer de grands récipients vers les lieux lointains. De plus, le système de distribution est apte à préparer une petite quantité de la solution d'urée avec ou sans additif pour satisfaire les besoins individuels sans nécessiter d'accéder à une station-service.

Selon des modes de réalisation particuliers, le système de distribution présente en outre une ou plusieurs des caractéristiques optionnelles suivantes, prise(s) isolément ou suivant toute(s) combinaison(s) possible(s) :
- la solution d'urée est une solution aqueuse d'urée, la concentration d'urée en solution aqueuse étant sensiblement égale à 32,5 % et répondant à la norme ISO22241 ;
- le système de distribution comporte un deuxième ensemble de circuits fluidiques comprenant :
   - un premier circuit fluidique supplémentaire raccordant le premier récipient à une jonction supplémentaire,
   - au moins un deuxième circuit fluidique supplémentaire raccordant le deuxième récipient à la jonction supplémentaire, la jonction supplémentaire plaçant le deuxième circuit fluidique supplémentaire en communication fluidique avec le premier circuit fluidique supplémentaire,
      le deuxième circuit fluidique supplémentaire comprenant une deuxième vanne configurable entre une position ouverte, dans laquelle le premier circuit fluidique supplémentaire est en communication fluidique avec le deuxième circuit fluidique supplémentaire de sorte à mélanger la solution d'urée et l'additif, et une position fermée, dans laquelle la communication fluidique entre le premier circuit fluidique supplémentaire et le deuxième circuit fluidique supplémentaire est interrompue, et
   - un deuxième circuit de distribution raccordé à la jonction supplémentaire, le deuxième circuit de distribution comprenant une deuxième sortie apte à délivrer la solution d'urée mélangée avec l'additif ou la solution d'urée sans l'additif ;
- le deuxième circuit fluidique du premier ensemble de circuits fluidiques et/ou le deuxième circuit fluidique supplémentaire du deuxième ensemble de circuits fluidiques comprend une pompe doseuse apte à régler la quantité d'additif s'écoulant vers la jonction respective ;
- le premier circuit de distribution du premier ensemble de circuits fluidiques et/ou le deuxième circuit de distribution du deuxième ensemble de circuits fluidiques comprend une pompe de transfert configurée pour transférer la solution d'urée avec ou sans additif jusqu'à la sortie respective ;
- le deuxième ensemble de circuits fluidiques comprend un circuit fluidique direct de la solution d'urée raccordant le premier récipient à la deuxième sortie du deuxième ensemble de circuits fluidiques, le circuit fluidique direct étant dépourvu de pompe ;
- le premier récipient présente un volume supérieur ou égal à 1 m³ ;
- l'additif est choisi parmi les alcools polyalcoxylés, de préférence ayant des groupements éthoxylés et/ou propoxylés, de préférence dont la balance hydrophile/lipophile est comprise entre 7 et 17 ;
- le système de distribution comporte à l'intérieur du conteneur :
   - au moins un troisième récipient d'un additif supplémentaire pour la solution d'urée,
   - au moins un troisième circuit fluidique raccordant le troisième récipient à la jonction, la jonction plaçant le troisième circuit fluidique en communication fluidique avec les premier et deuxième circuits fluidiques,
      le troisième circuit fluidique comprenant une vanne configurable entre une position ouverte, dans laquelle les premier et deuxième circuits fluidiques sont en communication fluidique avec le troisième circuit fluidique de sorte à mélanger la solution d'urée avec l'additif et/ou l'additif supplémentaire, et une position fermée, dans laquelle la communication fluidique entre les premier et deuxième circuits fluidiques et le troisième circuit fluidique est interrompue,
      la première sortie étant apte à délivrer la solution d'urée mélangée avec l'additif, la solution d'urée mélangée avec l'additif supplémentaire, la solution d'urée mélangée avec l'additif et l'additif supplémentaire, ou la solution d'urée sans l'additif ni l'additif supplémentaire.

L'invention a également pour objet une installation de distribution comportant un système de distribution tel que décrit ci-dessus et un contenant raccordé fluidiquement à la première sortie, le système de distribution étant apte à injecter la solution d'urée mélangée avec l'additif ou la solution d'urée sans l'additif dans le bidon.

Selon un mode de réalisation particulier, l'installation de distribution comporte en outre une citerne de produit final raccordée fluidiquement à la deuxième sortie, le système de distribution étant apte à injecter la solution d'urée mélangée avec l'additif ou la solution d'urée sans l'additif dans la citerne de produit final, le volume de la citerne de produit final présentant un volume strictement supérieur au volume du bidon.

L'invention sera mieux comprise à la lecture de la description qui va suivre, donnée uniquement à titre d'exemple, et faite en se référant aux dessins annexés, sur lesquels :
[Fig 1] la Figure 1 est une vue schématique d'une installation de distribution d'une solution d'urée selon un mode de réalisation l'invention ;
[Fig 2] la Figure 2 est une vue schématique en perspective d'un système de distribution de l'installation de distribution selon un mode de réalisation de l'invention ;
[Fig 3] la Figure 3 est une vue en perspective des premier et deuxième circuits fluidiques et du premier circuit de distribution du système de distribution de la Figure 2 ; et
[Fig 4] la Figure 4 est une vue en perspective d'une installation de distribution d'urée selon un autre mode de réalisation.

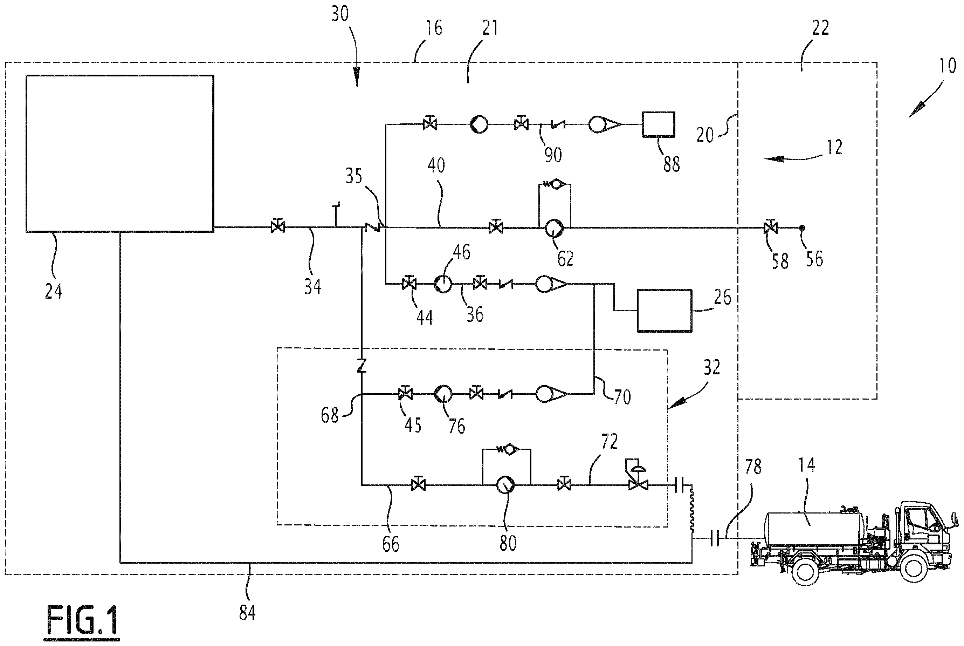

La Figure 1 représente une installation de distribution 10. L'installation 10 comporte un système de distribution 12 d'une solution d'urée. Avantageusement, l'installation 10 comprend également un contenant (non-représenté sur les Figures) apte à être raccordé fluidiquement au système de distribution 12 pour être rempli par la solution d'urée mélangée avec un additif ou sans additif, comme cela sera décrit ultérieurement. Avantageusement, l'installation 10 comprend également un réservoir 14 de la solution d'urée apte à être raccordé fluidiquement au système de distribution 12. Avantageusement, l'installation 10 comprend également une citerne de produit final (non-représentée sur les Figures) apte à être raccordée fluidiquement au système de distribution 12.

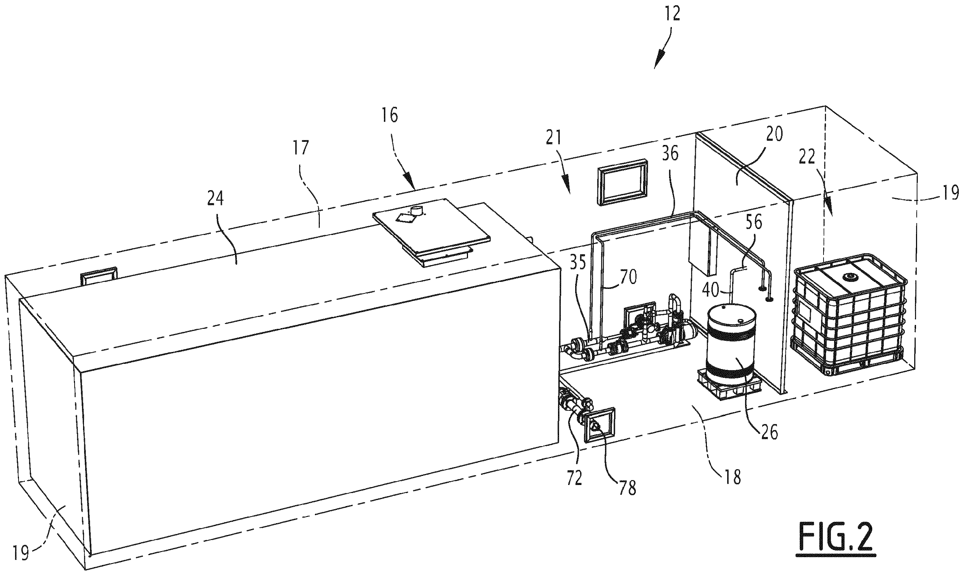

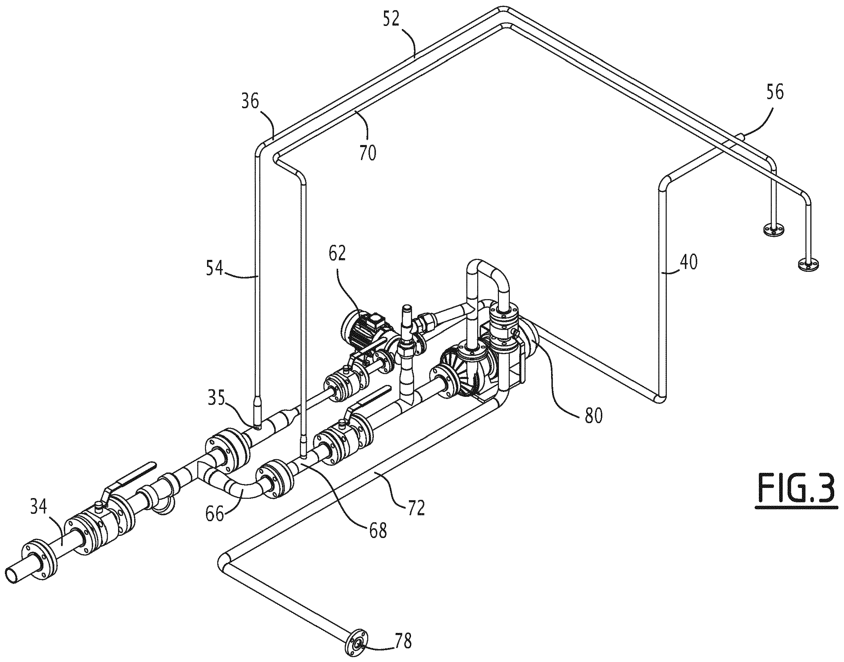

Les Figures 2 et 3 illustrent le système de distribution 12 d'une solution aqueuse d'urée à partir d'urée solide et d'eau déminéralisée. Une telle solution aqueuse d'urée forme un fluide d'échappement Diesel permettant de convertir la plus grande partie des oxydes d'azote contenus dans les gaz d'échappement en azote et en vapeur d'eau. La concentration d'urée en solution aqueuse est sensiblement égale à 32,5 % et répond à la norme ISO22241. Une telle solution d'urée est par exemple décrite dans le document FR 3 053 603. Une telle solution est couramment connue sous le nom commercial de « Adblue ».

L'urée est par exemple fournie sous la forme d'agglomérats d'urée solide. Les agglomérats se présentent par exemple sous la forme de bille. L'urée solide est ensuite dissoute dans de l'eau pour former une solution d'urée. Puis, la solution d'urée est mise en récipients.

Le système de distribution 12 comprend un conteneur transportable 16. Le conteneur transportable 16 est un conteneur de transport de marchandises, notamment selon les normes ISO 668 et ISO 1496 de la construction des conteneurs.

Sur la Figure 2, pour des raisons de clarté des dessins, le conteneur 16 est représenté schématiquement en traits mixtes.

Selon un premier mode de réalisation de l'invention tel qu'illustré sur les Figures 2 à 3, le conteneur transportable 16 est un conteneur de 40 pieds. Selon un second mode de réalisation, le conteneur est un conteneur de 20 pieds.

Par « transportable », on entend que le conteneur 16 est montable sur et apte à être déplacé par un véhicule de transport, tel qu'un camion, une voiture, ou un véhicule ferroviaire.

Le conteneur transportable 16 comprend un plafond 17, un plancher 18, et quatre parois latérales 19. Le plafond 17, le plancher 18, et les parois latérales 19 définissent un volume interne du conteneur transportable 16.

En option, le conteneur transportable 16 comprend une paroi de séparation 20 disposée dans le volume interne. La paroi de séparation 20 sépare le volume interne en un premier compartiment 21 et un deuxième compartiment 22 distinct du premier compartiment 21.

Le premier compartiment 21 comprend au moins un premier récipient 24 contenant la solution d'urée liquide préparée comme décrit précédemment, au moins un deuxième récipient 26 contenant un additif pour la solution d'urée, et un premier ensemble 30 de circuits fluidiques. Selon un mode de réalisation optionnel avantageux, le premier compartiment 21 comprend également un deuxième ensemble 32 de circuits fluidiques.

Le premier récipient 24 présente de préférence un volume supérieur ou égal à 1 m³, de préférence un volume supérieur ou égal à 2 m³, de préférence un volume supérieur ou égal à 5 m³, de préférence un volume supérieur ou égal à 10 m³, de préférence un volume supérieur ou égal à 20 m³, encore plus préférentiellement supérieur ou égal à 30 m³.

Le premier récipient 24 est avantageusement apte à être fixé dans le conteneur transportable 16, par exemple à une des parois latérales 19 ou à la paroi de séparation 20. Cet ancrage du premier récipient 24 permet en particulier d'éviter des renversements lorsque le conteneur transportable 16 est déplacé.

Le deuxième récipient 26 présente de préférence un volume compris entre 5 L et 1000 L, et est préférentiellement égal à 208 L. Dans toute la demande, et à moins d'une autre indication, les bornes d'un domaine de valeurs sont comprises dans ce domaine, notamment dans les expressions « compris entre » et « variant/s'étend de ... à ... ».

Le deuxième récipient 26 est avantageusement apte à être fixé dans le conteneur transportable 16, de préférence à une des parois latérales 19 ou à la paroi de séparation 20. Cet ancrage du deuxième récipient 26 permet en particulier d'éviter des renversements lorsque le conteneur transportable 16 est déplacé.

L'additif dans le deuxième récipient 26 est de préférence un additif polyfonctionnel choisi parmi les alcools polyalcoxylés ayant des groupements éthoxylés et/ou propoxylés dont la balance hydrophile/lipophile est compris entre 7 et 17.

La balance hydrophile/lipophile peut être mesurée selon la méthode Griffin ou selon la méthode Davies.

Plus précisément, les alcools polyalcoxylés sont choisis parmi les alcools gras linéaires ou ramifiés polyalcoxylés comprenant des chaînes carbonées de 3 à 40 atomes de carbone et de 5 à 10 motifs alcoxylés et présentant de préférence une balance hydrophile/lipophile variant de 10 à 15.

Le premier ensemble 30 de circuits fluidiques comprend un premier circuit fluidique 34 raccordant le premier récipient 24 à une jonction 35, au moins un deuxième circuit fluidique 36 raccordant le deuxième récipient 26 à la jonction 35, et un premier circuit de distribution 40 raccordé à la jonction 35. Ainsi, la jonction 35 place le deuxième circuit fluidique 36 en communication fluidique avec le premier circuit fluidique 34.

Le raccordement du premier récipient 24 au premier circuit fluidique 34 est de préférence effectué par l'intermédiaire d'un embout prévu à une extrémité du premier circuit fluidique 34 et vissé sur une vanne de raccordement du premier récipient 24.

Le deuxième circuit fluidique 36 comprend une première vanne 44 configurable entre une position ouverte et une position fermée. Lorsque la première vanne 44 est dans sa position ouverte, le premier circuit fluidique 34 est en communication fluidique avec le deuxième circuit fluidique 36 de sorte à mélanger la solution d'urée et l'additif. Lorsque la première vanne 44 est dans sa position fermée, la communication fluidique entre le premier circuit fluidique 34 et le deuxième circuit fluidique 36 est interrompue.

La première vanne 44 est de préférence actionnable manuellement. En variante, l'actionnement de la première vanne 44 est automatisé.

Avantageusement, le deuxième circuit fluidique 36 comprend une première pompe doseuse 46 apte à régler la quantité de l'additif s'écoulant vers la jonction 35. La première pompe doseuse 46 du deuxième circuit fluidique 36 est de préférence apte à transférer un liquide à un débit compris entre 45 mL/min et 70 mL/min, et égal avantageusement à 56 mL/min. Ce débit relativement faible est compatible avec la préparation d'un produit final pour des contenants individuels dont le volume interne relativement faible nécessite une quantité relativement faible d'additif.

Le deuxième circuit fluidique 36 comprend de préférence une première conduite horizontale 52 et une première conduite verticale 54. La première conduite horizontale 52 est raccordée à sa première extrémité au deuxième récipient 26. La première conduite verticale 54 est raccordée, à sa première extrémité, à la première conduite horizontale 52, et à sa deuxième extrémité, à la jonction 35. La première conduite horizontale 52 s'étend sensiblement parallèlement au plancher 18. La première conduite verticale 54 s'étend sensiblement selon une direction d'élévation perpendiculaire au plancher 18.

La première conduite horizontale 52 présente une hauteur mesurée selon la direction d'élévation de préférence comprise entre 1400 mm et 1650 mm, avantageusement égale à 1560 mm, par rapport à la jonction 35. La hauteur de la première conduite horizontale 52 permet en particulier de faire passer la première conduite horizontale 52 au-dessus d'un opérateur dans le conteneur transportable 16 pour lui permettre de circuler dans le conteneur plus facilement.

Avantageusement, la première conduite horizontale 52 s'étend le long d'une paroi latérale 19, la distance maximale entre la première conduite horizontale 52 et ladite paroi latérale 19 étant inférieure ou égale à 100 mm. Cette configuration en particulier libère encore de l'espace dans le volume intérieur afin de permettre à l'opérateur de circuler dans le conteneur 16 plus facilement.

Le premier circuit de distribution 40 est apte à délivrer la solution d'urée mélangée avec l'additif ou la solution d'urée sans l'additif.

Le premier circuit de distribution 40 comprend une première sortie 56 libre. La première sortie 56 est apte à délivrer directement la solution d'urée mélangée avec l'additif ou la solution d'urée sans l'additif.

La première sortie 56 débouche sur le deuxième compartiment 22. La première sortie 56 s'étend à une hauteur accessible pour un opérateur lorsque l'opérateur récupère la solution d'urée mélangée avec l'additif ou la solution d'urée sans l'additif dans le deuxième compartiment 22. A cet effet, la première sortie 56 s'étend, par rapport au plancher 18, sensiblement à la hauteur d'un opérateur.

Avantageusement, la première sortie 56 est raccordable fluidiquement à une potence de distribution. Lorsque la première sortie 56 est raccordée à la potence de distribution, le premier circuit de distribution 40 est apte à remplir des contenants individuels.

Avantageusement, le premier circuit de distribution 40 comprend également une première vanne de distribution 58 (visible sur la Figure 1) configurable entre une position ouverte dans laquelle un fluide dans le premier circuit de distribution 40 est apte à être délivré par la première sortie 56, et une position fermée dans laquelle l'écoulement d'un liquide dans le premier circuit de distribution 40 à travers la première vanne de distribution 58 est interrompue.

Avantageusement, la première vanne de distribution 58 est disposée dans le deuxième compartiment 22. Ainsi, un utilisateur dans le deuxième compartiment 22 est apte à ouvrir ou fermer la première vanne de distribution 58 afin de démarrer ou arrêter l'écoulement de liquide à travers la première sortie 56.

Avantageusement, le premier circuit de distribution 40 comprend en outre une première pompe de transfert 62 configurée pour transférer la solution d'urée avec ou sans additif jusqu'à la première sortie 56. La première pompe de transfert 62 est apte à transférer du liquide à un débit compris entre 25 L/min et 50 L/min, et égal de préférence à 35 L/min. Le débit relativement faible de la première pompe de transfert 62 est adapté pour remplir des contenants individuels dont le volume interne est relativement faible, par exemple compris entre 10 litres et 1000 litres.

De manière similaire au premier ensemble 30 de circuits fluidiques, le deuxième ensemble 32 de circuits fluidiques comprend un premier circuit fluidique supplémentaire 66 à une jonction supplémentaire 68, au moins un deuxième circuit fluidique supplémentaire 70 raccordant le deuxième récipient 26 à la jonction supplémentaire 68, et un deuxième circuit de distribution 72 raccordé à la jonction supplémentaire 68. Ainsi, la jonction supplémentaire 68 place le deuxième circuit fluidique supplémentaire 70 en communication fluidique avec le premier circuit fluidique supplémentaire 66.

Les caractéristiques du premier circuit fluidique supplémentaire 66, de la jonction supplémentaire 68, du deuxième circuit fluidique supplémentaire 70 et du deuxième circuit de distribution 72 sont respectivement identiques au premier circuit fluidique 34, à la jonction 35, au deuxième circuit fluidique 36 et au premier circuit de distribution 40 et ne seront pas à nouveau décrites en détail.

En particulier, le deuxième circuit fluidique supplémentaire 70 comprend une deuxième vanne 45 configurable entre une position ouverte, dans laquelle le premier circuit fluidique supplémentaire 66 est en communication fluidique avec le deuxième circuit fluidique supplémentaire 70 de sorte à mélanger la solution d'urée et l'additif, et une position fermée, dans laquelle la communication fluidique entre le premier circuit fluidique supplémentaire 66 et le deuxième circuit fluidique supplémentaire 70 est interrompue.

Avantageusement, le deuxième circuit fluidique supplémentaire 70 comprend une deuxième pompe doseuse 76, différente de la première pompe doseuse 46 décrite précédemment, apte à régler la quantité d'additif s'écoulant vers la jonction supplémentaire 68. La deuxième pompe doseuse 76 du deuxième circuit supplémentaire 70 est apte à transférer un liquide à un débit compris entre 20 L/h et 45 L/h, et de préférence égal à 33 L/h. La deuxième pompe doseuse 76 présente donc un débit supérieur au débit de la première pompe doseuse 46. Ceci rend la deuxième pompe doseuse 76 compatible avec la préparation d'un produit final pour un récipient de grand volume qui présente un volume supérieur à celui d'un bidon individuel. Ledit récipient de grand volume présente par exemple un volume interne compris entre 20 m³ et 35 m³, et égal avantageusement à 25 m3.

Le deuxième circuit de distribution 72 comprend une deuxième sortie 78. La deuxième sortie 78 est apte à délivrer directement la solution d'urée mélangée avec l'additif ou la solution d'urée sans l'additif. La deuxième sortie 78 est également apte à recevoir la solution d'urée délivrée par le réservoir 14 de la solution d'urée.

La deuxième sortie 78 s'étend à une hauteur accessible pour un opérateur lorsque le conteneur 16 est posé sur une remorque afin de faciliter sa récupération de liquides à la deuxième sortie 78. A cet effet, la deuxième sortie 78 s'étend sensiblement au niveau du plancher 18 du conteneur 16.

La deuxième sortie 78 est raccordable fluidiquement au réservoir 14 de la solution d'urée. La deuxième sortie 78 est raccordée de façon amovible au réservoir 14 de la solution d'urée, par exemple par l'intermédiaire d'un tuyau.

La deuxième sortie 78 débouche sur une paroi latérale 19 du conteneur transportable 16.

Avantageusement, le deuxième circuit fluidique 36 comprend en outre une deuxième pompe de transfert 80, différente de la première pompe de transfert 62 décrite précédemment, configurée pour transférer la solution d'urée avec ou sans additif jusqu'à la deuxième sortie 78. La deuxième pompe de transfert 80 est apte à transférer un liquide à un débit compris entre 250 L/min et 600 L/min, et de préférence égal à 417 L/min. La deuxième pompe de transfert 80 présente donc un débit supérieur au débit de la première pompe de transfert 62. Ceci rend la deuxième pompe de transfert 80 compatible avec le remplissage à une vitesse plus élevée d'un récipient de grand volume qui présente un volume supérieur à celui d'un bidon individuel.

Avantageusement, le deuxième circuit fluidique 36 comprend en outre un circuit fluidique direct 84 de la solution d'urée raccordant le premier récipient 24 à la deuxième sortie 78. Le réservoir 14 de la solution d'urée est apte à remplir le premier récipient 24 directement par l'intermédiaire du circuit fluidique direct 84, sans passer par le premier circuit fluidique supplémentaire 66 ou le deuxième circuit fluidique supplémentaire 70.

Ainsi, le circuit fluidique direct 84 permet de réapprovisionner la solution d'urée du système de distribution 12 à partir du réservoir 14 de la solution d'urée.

Avantageusement, le circuit fluidique direct 84 est dépourvu de pompe. En effet, le réservoir 14 de la solution d'urée comprend une pompe de réservoir (non-représentée sur les Figures) à la sortie du réservoir 14 de la solution d'urée, la pompe de réservoir étant destinée à transférer la solution d'urée depuis le réservoir 14 de la solution d'urée vers le circuit fluidique direct 84.

Selon ce mode de réalisation, la deuxième sortie 78 est à la fois apte à recevoir la solution d'urée du réservoir 14 de la solution d'urée afin de réapprovisionner le premier récipient 24, et apte à délivrer la solution d'urée mélangée avec l'additif ou la solution d'urée sans l'additif à une citerne de produit final autre que le réservoir 14 de la solution d'urée.

Alternativement, à la place du réservoir 14 de la solution d'urée, le premier récipient 24 est apte à être raccordé à un récipient supplémentaire contenant la solution d'urée afin d'augmenter la quantité de la solution d'urée qui est délivrée par le système de distribution 12. Le raccordement du premier récipient 24 au récipient supplémentaire est de préférence effectué par l'intermédiaire d'un tuyau de connexion. Le tuyau de connexion présente une première extrémité apte à être vissé sur la vanne de raccordement du premier récipient 24, et une deuxième extrémité apte à être raccordée à la sortie du récipient supplémentaire. Le vissage est par exemple effectué par un vissage simple du type raccord pompier.

Ledit récipient supplémentaire est de préférence un conteneur citerne, également connu sous son nom anglais « *ISO tank container* »*.* Ce conteneur citerne contient la solution d'urée.

Le deuxième compartiment 22 présente un volume inférieur au volume du premier compartiment 21.

Le deuxième compartiment 22 peut être destiné à recevoir des utilisateurs qui possèdent des bidons individuels à remplir par la première sortie 56. La séparation des premier compartiment et deuxième compartiment 21, 22 par la paroi de séparation 20 permet d'isoler le premier ensemble 30 de circuits fluidiques et des utilisateurs avec des bidons individuels, afin d'assurer la sécurité des utilisateurs. Avantageusement, la paroi de séparation 20 permet également d'isoler le deuxième ensemble 32 de circuits fluidiques et le deuxième compartiment 22.

Avantageusement, le deuxième compartiment 22 est apte à recevoir au moins un conteneur citerne contenant la solution d'urée et/ou l'additif. Le conteneur citerne présente un volume interne compris entre 800 L et 1200 L, et de préférence égal à 1000 L.

Avantageusement, le conteneur transportable 16 comprend au moins une fenêtre sur sa paroi débouchant vers une pompe de transfert pour faciliter l'accès à celle-ci.

Le bidon individuel présente de préférence un volume inférieur ou égal à 15 L, avantageusement inférieur ou égal à 10 L, encore avantageusement inférieur ou égal à 2,5 L.

La citerne de produit final est de préférence une citerne d'un véhicule de transport tel qu'un camion. Elle présente un volume strictement supérieur au volume d'un bidon individuel. Elle présente de préférence un volume compris entre 20 m³ et 35 m³, et égal avantageusement à 25 m³.

Grâce à l'invention décrite ci-dessus, il est maintenant possible de délivrer la solution d'urée mélangée avec ou sans additif à tout type de récipient. En effet, la première sortie 56 peut être raccordée à un récipient transportable à la main de préférence un contenant présentant un volume inférieur ou égal à 10 litres, en particulier inférieur ou égal à 5 litres, pour satisfaire les besoins des utilisations individuelles. Le cas échéant, la deuxième sortie 78 peut être raccordée à un récipient de plus grande contenance, de préférence supérieure ou égal à 10 m³, ou une pompe de distribution de la solution d'urée. La transportabilité du conteneur 16, dans lequel sont disposés les premier et deuxième récipients 24, 26, permet aussi bien de recharger les grands réservoirs ou des pompes de solution d'urée dans une station-service que de fournir la solution d'urée mélangée avec ou sans additif à des particuliers directement dans les lieux dépourvus de stations-service munies de grands récipients ou de pompe de solution d'urée.

De plus, l'ensemble du système de distribution 12 est transportable. Il est donc possible de déplacer le système de distribution 12 vers des endroits lointains afin de fournir la solution d'urée et la solution d'urée mélangée avec l'additif.

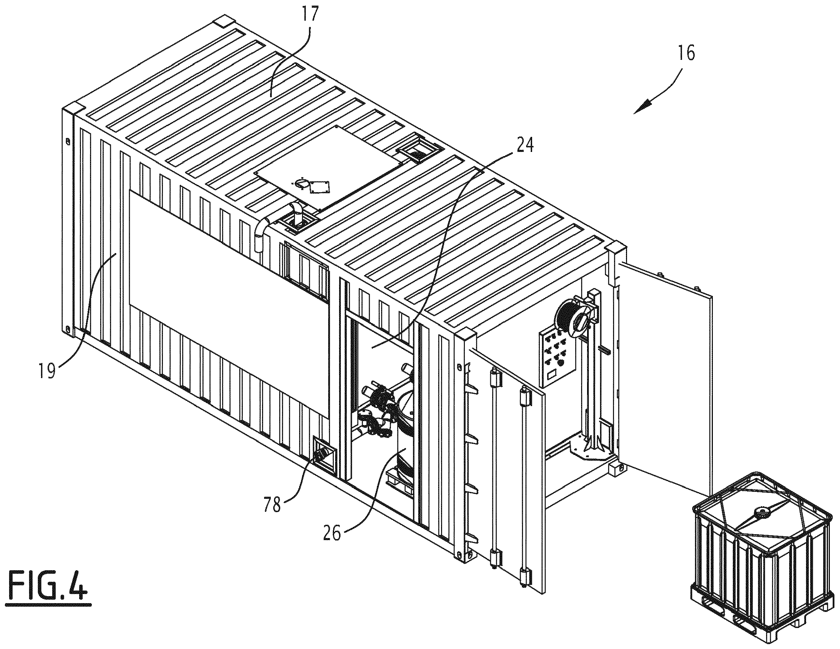

Selon un deuxième mode de réalisation de l'invention illustré sur la Figure 4, le conteneur transportable 16 est un conteneur de 20 pieds.

Selon ce mode de réalisation, le conteneur transportable 16 est de préférence dépourvu de paroi de séparation, et il comprend un seul compartiment 21. Les premier et deuxième récipients 24, 26 sont disposés dans ce compartiment unique 21.

Selon ce mode de réalisation, le premier récipient 24 présente un volume sensiblement égal à 15 m³.

En option, et comme illustré sur la Figure 1, le système de distribution 12 comprend un troisième récipient 88 d'un deuxième type d'additif et un troisième circuit fluidique 90 raccordant le troisième récipient 88 au premier circuit de distribution 40, en particulier à la jonction 35, de sorte qu'il est possible de fournir en sortie 56 un produit final parmi la solution d'urée sans additif, la solution d'urée mélangée avec le premier type d'additif contenu dans le deuxième récipient 26, la solution d'urée mélangée avec le deuxième type d'additif contenu dans le troisième récipient 88, ou la solution d'urée mélangée avec les premier et deuxième types d'additifs.

Le deuxième type d'additif est de préférence un colorant pour la solution d'urée ou pour le premier type d'additif. En variante, le deuxième type d'additif est un additif de performance, permettant d'améliorer l'efficacité de la solution d'urée dans le traitement des NOx : un deuxième alcool, un métal...

Il est entendu que d'autres récipients et circuits fluidiques correspondant pourraient être ajoutés selon les nécessités de mélange de la solution d'urée avec différents types d'additifs.

## Revendications

1. Système de distribution (12) d'une solution d'urée, comprenant un conteneur transportable (16) et comportant à l'intérieur du conteneur (16) :
- au moins un premier récipient (24) d'une solution d'urée,
- au moins un deuxième récipient (26) d'un additif pour la solution d'urée, et
- au moins un premier ensemble (30) de circuits fluidiques, comprenant :
- un premier circuit fluidique (34) raccordant le premier récipient (24) à une jonction (35),
- au moins un deuxième circuit fluidique (36) raccordant le deuxième récipient (26) à la jonction (35), la jonction (35) plaçant le deuxième circuit fluidique (36) en communication fluidique avec le premier circuit fluidique (34),
le deuxième circuit fluidique (36) comprenant une première vanne (44) configurable entre une position ouverte, dans laquelle le premier circuit fluidique (34) est en communication fluidique avec le deuxième circuit fluidique (36) de sorte à mélanger la solution d'urée et l'additif, et une position fermée, dans laquelle la communication fluidique entre le premier circuit fluidique (34) et le deuxième circuit fluidique (36) est interrompue, et
- un premier circuit de distribution (40) raccordé à la jonction (35), le premier circuit de distribution (40) comprenant une première sortie (56) apte à délivrer la solution d'urée mélangée avec l'additif ou la solution d'urée sans l'additif.

2. Système de distribution (12) selon la revendication 1, dans lequel la solution d'urée est une solution aqueuse d'urée, la concentration d'urée en solution aqueuse étant sensiblement égale à 32,5 % et répondant à la norme ISO22241.

3. Système de distribution (12) selon la revendication 1 ou 2, comportant un deuxième ensemble (32) de circuits fluidiques comprenant :
- un premier circuit fluidique supplémentaire (66) raccordant le premier récipient (24) à une jonction supplémentaire (68),
- au moins un deuxième circuit fluidique supplémentaire (70) raccordant le deuxième récipient (26) à la jonction supplémentaire (68), la jonction supplémentaire (68) plaçant le deuxième circuit fluidique supplémentaire (70) en communication fluidique avec le premier circuit fluidique supplémentaire (66),
le deuxième circuit fluidique supplémentaire (70) comprenant une deuxième vanne (45) configurable entre une position ouverte, dans laquelle le premier circuit fluidique supplémentaire (66) est en communication fluidique avec le deuxième circuit fluidique supplémentaire (70) de sorte à mélanger la solution d'urée et l'additif, et une position fermée, dans laquelle la communication fluidique entre le premier circuit fluidique supplémentaire (66) et le deuxième circuit fluidique supplémentaire (70) est interrompue, et
- un deuxième circuit de distribution (72) raccordé à la jonction supplémentaire (68), le deuxième circuit de distribution (72) comprenant une deuxième sortie (78) apte à délivrer la solution d'urée mélangée avec l'additif ou la solution d'urée sans l'additif.

4. Système de distribution (12) selon la revendication 3, dans lequel le deuxième circuit fluidique (36) du premier ensemble (30) de circuits fluidiques et/ou le deuxième circuit fluidique supplémentaire (70) du deuxième ensemble (32) de circuits fluidiques comprend une pompe doseuse (46, 76) apte à régler la quantité d'additif s'écoulant vers la jonction (35, 68) respective.

5. Système de distribution (12) selon la revendication 3 ou 4, dans lequel le premier circuit de distribution (40) du premier ensemble (30) de circuits fluidiques et/ou le deuxième circuit de distribution (72) du deuxième ensemble (32) de circuits fluidiques comprend une pompe de transfert (62, 80) configurée pour transférer la solution d'urée avec ou sans additif jusqu'à la sortie (56, 78) respective.

6. Système de distribution (12) selon l'une quelconque des revendications 3 à 5, dans lequel le deuxième ensemble (32) de circuits fluidiques comprend un circuit fluidique direct (84) de la solution d'urée raccordant le premier récipient (24) à la deuxième sortie (78) du deuxième ensemble (32) de circuits fluidiques, le circuit fluidique direct (84) étant dépourvu de pompe.

7. Système de distribution (12) selon l'une quelconque des revendications précédentes, dans lequel le premier récipient (24) présente un volume supérieur ou égal à 1 m³.

8. Système de distribution (12) selon l'une quelconque des revendications précédentes, dans lequel l'additif est choisi parmi les alcools polyalcoxylés, de préférence ayant des groupements éthoxylés et/ou propoxylés, de préférence dont la balance hydrophile/lipophile est comprise entre 7 et 17.

9. Système de distribution (12) selon l'une quelconque des revendications précédentes, comportant à l'intérieur du conteneur (16) :
- au moins un troisième récipient d'un additif supplémentaire pour la solution d'urée,
- au moins un troisième circuit fluidique raccordant le troisième récipient à la jonction (35), la jonction (35) plaçant le troisième circuit fluidique en communication fluidique avec les premier et deuxième circuits fluidiques (34, 36),
le troisième circuit fluidique comprenant une vanne configurable entre une position ouverte, dans laquelle les premier et deuxième circuits fluidiques (34, 36) sont en communication fluidique avec le troisième circuit fluidique de sorte à mélanger la solution d'urée avec l'additif et/ou l'additif supplémentaire, et une position fermée, dans laquelle la communication fluidique entre les premier et deuxième circuits fluidiques (34, 36) et le troisième circuit fluidique est interrompue,
la première sortie (56) étant apte à délivrer la solution d'urée mélangée avec l'additif, la solution d'urée mélangée avec l'additif supplémentaire, la solution d'urée mélangée avec l'additif et l'additif supplémentaire, ou la solution d'urée sans l'additif ni l'additif supplémentaire.

10. Installation de distribution (10), comportant un système de distribution (12) selon l'une quelconque des revendications précédentes et un contenant raccordé fluidiquement à la première sortie (56), le système de distribution (12) étant apte à injecter la solution d'urée mélangée avec l'additif ou la solution d'urée sans l'additif dans un bidon.

11. Installation de distribution (10) selon la revendication 10 combinée avec la revendication 3, comportant en outre une citerne de produit final raccordée fluidiquement à la deuxième sortie (78), le système de distribution (12) étant apte à injecter la solution d'urée mélangée avec l'additif ou la solution d'urée sans l'additif dans la citerne de produit final, le volume de la citerne de produit final présentant un volume strictement supérieur au volume du bidon.

## Patentansprüche

1. Verteilungssystem (12) für eine Harnstofflösung, umfassend einen transportablen Behälter (16) und umfassend im Inneren des Behälters (16):
- mindestens einen ersten Behälter (24) einer Harnstofflösung,
- mindestens einen zweiten Behälter (26) eines Additivs für die Harnstofflösung und
- mindestens eine erste Anordnung (30) von Fluidkreisläufen, umfassend:
- einen ersten Fluidkreislauf (34), der den ersten Behälter (24) mit einer Verbindungsstelle (35) verbindet,
- mindestens einen zweiten Fluidkreislauf (36), der den zweiten Behälter (26) mit der Verbindungsstelle (35) verbindet, wobei die Verbindungsstelle (35) den zweiten Fluidkreislauf (36) in Fluidverbindung mit dem ersten Fluidkreislauf (34) bringt,
der zweite Fluidkreislauf (36) umfassend ein erstes Ventil (44), das zwischen einer offenen Position, in der der erste Fluidkreislauf (34) in Fluidverbindung mit dem zweiten Fluidkreislauf (36) ist, um die Harnstofflösung und das Additiv zu mischen, und einer geschlossenen Position, in der die Fluidverbindung zwischen dem ersten Fluidkreislauf (34) und dem zweiten Fluidkreislauf (36) unterbrochen ist, konfiguriert werden kann, und
- einen ersten Verteilerkreis (40), der mit der Verbindung (35) verbunden ist, der erste Verteilerkreis (40) umfassend einen ersten Auslass (56), der geeignet ist, um die mit dem Additiv gemischte Harnstofflösung oder die Harnstofflösung ohne das Additiv abzugeben.

2. Verteilungssystem (12) nach Anspruch 1, wobei die Harnstofflösung eine wässrige Harnstofflösung ist, wobei die Harnstoffkonzentration in der wässrigen Lösung im Wesentlichen 32,5 % ist und der Norm ISO 22241 entspricht.

3. Verteilungssystem (12) nach Anspruch 1 oder 2, umfassend eine zweite Anordnung (32) von Fluidkreisläufen, umfassend:
- einen ersten ergänzenden Fluidkreislauf (66), der den ersten Behälter (24) mit einer ergänzenden Verbindungsstelle (68) verbindet,
- mindestens einen zweiten ergänzenden Fluidkreislauf (70), der den zweiten Behälter (26) mit der ergänzenden Verbindungsstelle (68) verbindet, wobei die ergänzende Verbindungsstelle (68) den zweiten ergänzenden Fluidkreislauf (70) in Fluidverbindung mit dem ersten ergänzenden Fluidkreislauf (66) bringt,
der zweite ergänzende Fluidkreislauf (70) umfassend ein zweites Ventil (45), das zwischen einer offenen Position, in der der erste ergänzende Fluidkreislauf (66) in Fluidverbindung mit dem zweiten ergänzenden Fluidkreislauf (70) ist, um die Harnstofflösung und das Additiv zu mischen, und einer geschlossenen Position, in der die Fluidverbindung zwischen dem ersten ergänzenden Fluidkreislauf (66) und dem zweiten ergänzenden Fluidkreislauf (70) unterbrochen ist, konfiguriert werden kann, und
- einen zweiten Verteilungskreis (72), der mit der ergänzenden Verbindung (68) verbunden ist, der zweite Verteilungskreis (72) umfassend einen zweiten Auslass (78), der geeignet ist, um die mit dem Additiv gemischte Harnstofflösung oder die Harnstofflösung ohne das Additiv zuzuführen.

4. Verteilungssystem (12) nach Anspruch 3, wobei der zweite Fluidkreislauf (36) der ersten Anordnung (30) von Fluidkreisläufen und/oder der ergänzende zweite Fluidkreislauf (70) der zweiten Anordnung (32) von Fluidkreisläufen eine Dosierpumpe (46, 76) umfasst, die geeignet ist, um die Menge des Additivs, das zu der jeweiligen Verbindungsstelle (35, 68) fließt, einzustellen.

5. Verteilungssystem (12) nach Anspruch 3 oder 4, wobei der erste Verteilungskreislauf (40) der ersten Anordnung (30) von Fluidkreisläufen und/oder der zweite Verteilungskreislauf (72) der zweiten Anordnung (32) von Fluidkreisläufen eine Förderpumpe (62, 80) umfasst, die konfiguriert ist, um die Harnstofflösung mit oder ohne Additiv zu dem jeweiligen Auslass (56, 78) zu fördern.

6. Verteilungssystem (12) nach einem der Ansprüche 3 bis 5, wobei die zweite Anordnung (32) von Fluidkreisläufen einen direkten Fluidkreislauf (84) der Harnstofflösung umfasst, der den ersten Behälter (24) mit dem zweiten Auslass (78) der zweiten Anordnung (32) von Fluidkreisläufen verbindet, wobei der direkte Fluidkreislauf (84) über keine Pumpe verfügt.

7. Verteilungssystem (12) nach einem der vorherigen Ansprüche, wobei der erste Behälter (24) ein Volumen größer als oder gleich wie 1 m³ aufweist.

8. Verteilungssystem (12) nach einem der vorherigen Ansprüche, wobei das Additiv ausgewählt ist aus polyalkoxylierten Alkoholen, vorzugsweise mit ethoxylierten und/oder propoxylierten Gruppen, vorzugsweise mit einem Hydrophil/Lipophil-Gleichgewicht zwischen 7 und 17.

9. Verteilungssystem (12) nach einem der vorherigen Ansprüche, umfassend im Inneren des Behälters (16):
- mindestens einen dritten Behälter eines ergänzenden Additivs für die Harnstofflösung,
- mindestens einen dritten Fluidkreislauf, der den dritten Behälter mit der Verbindungsstelle (35) verbindet, wobei die Verbindungsstelle (35) den dritten Fluidkreislauf in Fluidverbindung mit dem ersten und dem zweiten Fluidkreislauf (34, 36) bringt,
der dritte Fluidkreislauf umfassend ein Ventil, das zwischen einer offenen Position, in der der erste und der zweite Fluidkreislauf (34, 36) in Fluidverbindung mit dem dritten Fluidkreislauf sind, um die Harnstofflösung mit dem Additiv und/oder dem ergänzenden Additiv zu mischen, und einer geschlossenen Position, in der die Fluidverbindung zwischen dem ersten und dem zweiten Fluidkreislauf (34, 36) und dem dritten Fluidkreislauf unterbrochen ist, konfiguriert werden kann,
wobei der erste Auslass (56) geeignet ist, um die mit dem Additiv gemischte Harnstofflösung, die mit dem ergänzenden Additiv gemischte Harnstofflösung, die mit dem Additiv und dem ergänzenden Additiv gemischte Harnstofflösung oder die Harnstofflösung ohne das Additiv oder das ergänzende Additiv zuzuführen.

10. Verteilungsanlage (10), umfassend ein Verteilungssystem (12) nach einem der vorherigen Ansprüche und einen Behälter, der fluidisch mit dem ersten Auslass (56) verbunden ist, wobei das Verteilungssystem (12) geeignet ist, um die mit dem Additiv gemischte Harnstofflösung oder die Harnstofflösung ohne das Additiv in einen Kanister zu injizieren.

11. Verteilungsanlage (10) nach Anspruch 10 in Kombination mit Anspruch 3, ferner umfassend einen Endprodukttank, der fluidisch mit dem zweiten Auslass (78) verbunden ist, wobei das Verteilungssystem (12) geeignet ist, um die mit dem Additiv gemischte Harnstofflösung oder die Harnstofflösung ohne das Additiv in den Endprodukttank einzuspritzen, wobei das Volumen des Endprodukttanks ein Volumen aufweist, das strikt größer ist als das Volumen des Kanisters.

## Claims

1. A dispensing system (12) for dispensing a urea solution, comprising a transportable container (16) and comprising, inside the container (16):
- at least a first vessel (24) containing a urea solution,
- at least a second vessel (26) containing an additive for the urea solution, and
- at least a first set (30) of fluidic circuits, comprising:
- a first fluidic circuit (34), connecting the first vessel (24) to a junction (35),
- at least a second fluidic circuit (36), connecting the second vessel (26) to the junction (35), the junction (35) placing the second fluidic circuit (36) in fluidic communication with the first fluidic circuit (34),
the second fluidic circuit (36) comprising a first valve (44), configurable between an open position in which the first fluidic circuit (34) is in fluidic communication with the second fluidic circuit (36) so as to mix the urea solution and the additive, and a closed position in which fluidic communication between the first fluidic circuit (34) and the second fluidic circuit (36) is interrupted, and
- a first dispensing circuit (40), connected to the junction (35), the first dispensing circuit (40) comprising a first outlet (56) adapted to deliver the urea solution mixed with the additive or the urea solution without the additive.

2. The dispensing system (12) according to claim 1, wherein the urea solution is an aqueous urea solution, the urea concentration in the aqueous solution being substantially equal to 32.5% and meeting the ISO22241 standard.

3. The dispensing system (12) according to claim 1 or 2, having a second set (32) of fluidic circuits comprising:
- a first additional fluidic circuit (66), connecting the first vessel (24) to an additional junction (68),
- at least a second additional fluidic circuit (70), connecting the second vessel (26) to the additional junction (68), the additional junction (68) placing the second additional fluidic circuit (70) in fluidic communication with the first additional fluidic circuit (66),
the second additional fluidic circuit (70) comprising a second valve (45), configurable between an open position in which the first additional fluidic circuit (66) is in fluidic communication with the second additional fluidic circuit (70) so as to mix the urea solution and the additive, and a closed position in which fluidic communication between the first additional fluidic circuit (66) and the second additional fluidic circuit (70) is interrupted, and
- a second dispensing circuit (72), connected to the additional junction (68), the second dispensing circuit (72) comprising a second outlet (78), adapted to deliver the urea solution mixed with the additive or the urea solution without the additive.

4. The dispensing system (12) according to claim 3, wherein the second fluidic circuit (36) of the first set (30) of fluidic circuits and/or the second additional fluidic circuit (70) of the second set (32) of fluidic circuits comprises a metering pump (46, 76) capable of regulating the amount of additive flowing to the respective junction (35, 68).

5. The dispensing system (12) according to claim 3 or 4, wherein the first dispensing circuit (40) of the first set (30) of fluidic circuits and/or the second dispensing circuit (72) of the second set (32) of fluidic circuits comprises a transfer pump (62, 80) configured to transfer the urea solution with or without additive to the respective outlet (56, 78).

6. The dispensing system (12) according to any one of claims 3 to 5, wherein the second set (32) of fluidic circuits comprises a direct fluidic circuit (84) of the urea solution connecting the first vessel (24) to the second outlet (78) of the second set (32) of fluidic circuits, the direct fluidic circuit (84) being without a pump.

7. The dispensing system (12) according to any one of the preceding claims, wherein the first vessel (24) has a volume greater than or equal to 1m³.

8. The dispensing system (12) according to any one of the preceding claims, wherein the additive is selected among polyalkoxylated alcohols, preferably having ethoxylated and/or propoxylated groups, preferably having a hydrophilic/lipophilic balance of between 7 and 17.

9. The dispensing system (12) according to any one of the preceding claims, comprising, inside the container (16):
- at least a third vessel of an additional additive for the urea solution,
- at least a third fluidic circuit, connecting the third vessel to the junction (35), the junction (35) placing the third fluidic circuit in fluidic communication with the first and second fluidic circuits (34, 36),
the third fluidic circuit comprising a valve, configurable between an open position in which the first and second fluidic circuits (34, 36) are in fluidic communication with the third fluidic circuit so as to mix the urea solution with the additive and/or with the additional additive, and a closed position in which the fluidic communication between the first and second fluidic circuits (34, 36) and the third fluidic circuit is interrupted,
the first outlet (56) being capable of delivering the urea solution mixed with the additive, the urea solution mixed with the additional additive, the urea solution mixed with the additive and the additional additive or the urea solution without the additive and additional additive.

10. A dispensing installation (10), comprising a dispensing system (12) according to any one of the preceding claims and a receptacle fluidically connected to the first outlet (56), the dispensing system (12) being capable of injecting the urea solution mixed with the additive or the urea solution without the additive into a canister.

11. The dispensing installation (10) according to claim 10 in combination with claim 3, further comprising a final product tank fluidically connected to the second outlet (78), the dispensing system (12) being capable of injecting the urea solution mixed with the additive or the urea solution without the additive into the final product tank, the volume of the final product tank having a volume strictly greater than the volume of the canister.
